# FASCICULE DE BREVET EUROPEEN

(11) **EP 1 153 741 B1**
(45) Date de publication et mention de la délivrance du brevet: **23.05.2007**
(21) Numéro de dépôt: 01201717.4
(22) Date de dépôt: 09.05.2001
(51) Int. Cl.: B32B 17/10, C03C 27/12

(54) **Procédé de fabrication d'un vitrage feuilleté avec un revêtement de surface transparent, protégé contre la corrosion, ainsi que le vitrage feuilleté**
Verfahren zur Herstellung einer Verbundglasscheibe mit einer transparenten korrosionsgeschützten Oberflächebeschichtung, sowie eine Verbundglasscheibe
Method for making a laminated glass with a transparent corrosion protected coating, as well as the laminated glass

(30) Priorité: 09.05.2000 DE 10022409
(43) Date de publication de la demande: 14.11.2001
(73) Titulaire: SAINT-GOBAIN GLASS FRANCE, 92400 Courbevoie (FR)
(72) Inventeur: Goerenz, Walter, 52477 Alsdorf (DE); Billert, Ullrich, 52066 Aachen (DE); Linnhöfer, Dieter, 52222 Stolberg (DE); Nievelstein, Walter, 6374 TV Landgraaf (NL); Van Der Meulen, Rolf, 52134 Herzogenrath (DE); Offermann, Volkmar, 52134 Herzogenrath (DE)
(74) Mandataire: Cardin, Elise

(56) Documents cités:
- EP-A- 0 811 481
- FR-A- 2 762 541
- US-A- 5 131 967

## Description

L'invention concerne un procédé de fabrication d'un vitrage feuilleté pourvu d'un revêtement de surface transparent protégé contre la corrosion et les vitrages feuilletés ainsi obtenus.

Des vitrages feuilletés pourvus d'un revêtement de surface transparent sur l'un des panneaux sont souvent utilisés dans la construction automobile et dans l'architecture. Dans ce cas, le terme "transparent" se rapporte au domaine spectral visible de la lumière. Le revêtement de surface transparent sert de chauffage électrique superficiel ou de couche réfléchissante pour un spectre de rayonnement électromagnétique déterminé, comme par exemple un rayonnement infrarouge, et est généralement conçu en tant que système multicouche conducteur de l'électricité avec de l'argent en tant que couche fonctionnelle et des couches diélectriques d'arrêt et antireflet ; on connaît toutefois aussi d'autres constructions de couches. Comme les systèmes à couche mince du type mentionné ne sont en général pas résistants à la corrosion, ils sont inclus à l'intérieur d'un composite formé de panneaux de verre et/ou de plastique. Après l'inclusion des systèmes de couches dans un composite, il peut toutefois se poser le problème de l'apparition d'une corrosion de la couche mince conductrice au niveau de l'arête périphérique des panneaux feuilletés.

On sait, d'après le document US-A-5 131 967, réduire la corrosion au bord en enlevant avec un rayon laser le revêtement de surface appliqué sur un panneau de verre le long de son bord. La zone enlevée a une largeur d'environ 0,025 mm à 3,2 mm. On peut en l'occurrence simplement réaliser une ligne de séparation dans le revêtement de surface à une légère distance du bord du panneau de verre, ou la couche d'une zone périphérique du revêtement de surface peut être complètement enlevée le long du pourtour du panneau de verre. La zone dépourvue de couche produite par traitement au laser sert de barrage contre l'avance de la corrosion qui provient de l'arête périphérique. Lors de l'assemblage subséquent des panneaux de verre avec le film de colle, la surface incluse à l'intérieur de la ligne de séparation ou la surface réduite au niveau du bord est recouverte et scellée par le film de colle qui est ainsi protégée de l'environnement.

Une autre solution à un problème qui se pose de manière similaire lors de la fabrication d'un vitrage en verre feuilleté réfléchissant le rayonnement infrarouge composé de deux panneaux de verre individuels est proposée par le document DE-A-195 03 510. Dans le cas du vitrage feuilleté décrit dans ce document, la couche réfléchissant le rayonnement infrarouge ne se trouve pas sur un panneau individuel, mais sur un film porteur supplémentaire. Celui-ci est réuni avec deux couches de revêtement en matériau thermoplastique pour former le film de colle qui relie ensemble les deux panneaux de verre individuels. Dans ledit film de colle est découpé un morceau plat correspondant à la forme des panneaux de verre mais plus petit de quelques millimètres au niveau du bord. A partir du morceau plat du film de colle et de deux panneaux de verre enfermant ce dernier, un précomposite est créé en enlevant l'air entre le film de colle et les panneaux de verre, une fente latérale périphérique demeurant entre les panneaux de verre et l'arête périphérique du film de colle. Cette fente latérale du précomposite est remplie par injection, à l'état fondu, du même matériau thermoplastique que celui des couches de revêtement des films de colle. Ensuite, l'assemblage final des couches est effectué au cours d'un processus en autoclave.

Les deux procédés décrits sont efficaces mais relativement coûteux, car des installations spéciales telles qu'un poste de traitement laser ou une installation d'extrusion doivent être mises à disposition pour les étapes du procédé de protection contre la corrosion. Cet ensemble de machines n'est habituellement pas disponible lors de la fabrication de vitrages feuilletés.

L'invention a pour but de proposer un autre procédé de fabrication d'un vitrage feuilleté pourvu d'un revêtement de surface transparent, protégé contre la corrosion, qui soit mieux adapté à la fabrication industrielle.

L'invention a également pour objet le vitrage feuilleté protégé contre la corrosion obtenu selon ce procédé.

Selon l'invention, ce but est atteint par le procédé de fabrication d'un vitrage feuilleté se composant d'au moins deux panneaux dont l'un est pourvu sur sa surface se trouvant à l'intérieur du composite d'un revêtement de surface transparent protégé contre la corrosion, et de couches de colle reliant l'un à l'autre les panneaux respectifs, ce procédé étant caractérisé par les étapes suivantes :
- le long d'au moins une arête du panneau revêtu, le revêtement de surface transparent est enlevé dans une zone (A) se trouvant entre 0,1 mm et 5 mm de l'arête périphérique du panneau dans la direction de la surface principale du panneau,
- une couche protectrice imperméable à la diffusion de la vapeur d'eau et recouvrant l'arête limite extérieure du revêtement de surface transparent est appliquée le long du bord dépourvu de couche du panneau revêtu,
- les panneaux sont assemblés l'un à l'autre en intercalant à chaque fois une couche de colle de manière connue en soi pour former un vitrage feuilleté.

Le procédé selon l'invention se caractérise donc par le fait que le revêtement de surface transparent appliqué sur toute la surface principale d'un panneau est enlevé dans la zone de l'arête périphérique du panneau et qu'ensuite on applique un revêtement imperméable à la diffusion de vapeur d'eau qui est disposé de telle sorte qu'il recouvre la zone de transition entre les parties revêtue et non revêtue de la surface principale du panneau. Après l'assemblage des panneaux, le revêtement de surface se trouve à l'intérieur du composite et est de plus recouvert dans sa zone périphérique par le revêtement imperméable à la diffusion. Le revêtement de surface est également protégé contre les milieux agressifs présents dans l'environnement, qui pourraient pénétrer par le bord du vitrage feuilleté.

Le revêtement de surface transparent peut être enlevé très facilement par un procédé de traitement par abrasion comme le meulage ou le polissage.

Dans une mise en oeuvre particulièrement avantageuse du procédé selon l'invention, le revêtement de surface est simultanément enlevé avec un traitement des arêtes périphériques des vitres. En particulier, lorsque le panneau revêtu se compose de verre, un traitement par meulage des arêtes périphériques est souvent nécessaire, par exemple pour préparer d'autres étapes de procédé telles qu'un traitement thermique ou l'impression d'une surface. Il suffit souvent d'un simple meulage des arêtes pour éviter des blessures par coupure. Une configuration particulière du profil des meules pour le traitement des arêtes permet de meuler avec un tel outil, en une seule opération, l'arête périphérique et une partie de la surface du panneau revêtu. Pour cela, l'évidement en général en forme de C de la meule peut par exemple être formé perpendiculairement à son axe de rotation de manière asymétrique de sorte qu'une branche du C dépasse d'une mesure déterminée de la surface principale revêtue du panneau. La surface du panneau vient en contact avec la meule dans une zone qui s'étend entre 0,1 mm et 5 mm de l'arête périphérique en direction de la surface principale du panneau, ce par quoi la couche superficielle est enlevée par abrasion. Afin de garantir dans chaque cas un enlèvement complet du revêtement de surface transparent, un traitement du panneau lui-même à proximité de la surface peut être réalisé sous le revêtement de surface. Selon le type des processus suivants, on s'efforce d'obtenir une transition douce sans la formation d'escaliers entre la surface du panneau meulé et non meulé. En général, la surface de la zone non revêtue de la surface principale du panneau se raccorde à la surface de la zone revêtue en formant un angle compris entre 180° et 190°.

Dans une forme de réalisation du procédé selon l'invention, la couche protectrice se compose d'un composé organique. Il est toutefois nécessaire dans ce cas qu'il soit à la fois imperméable à la diffusion de la vapeur d'eau et qu'il satisfasse à toutes les exigences respectives en matière de durabilité et de résistance à long terme.

Si le panneau revêtu se compose d'un matériau résistant à une température élevée, comme c'est le cas par exemple pour les panneaux de verre, la couche protectrice recouvrant la zone périphérique de l'arête limite du revêtement de surface transparent susceptible d'être corrodé peut se composer également d'une peinture céramique à cuire. Afin qu'une telle peinture céramique à cuire entre en liaison durable avec le panneau de verre, elle doit être soumise à un traitement thermique, la cuisson.

La couche protectrice peut recouvrir entièrement la surface principale du panneau pourvu du revêtement de surface transparent, ou peut être conçue en forme de cadre. Dans la configuration en forme de cadre, la couche protectrice peut servir en même temps de cadre décoratif, si elle n'est pas transparente, c'est-à-dire opaque. Un tel revêtement opaque en forme de cadre possède souvent aussi une fonction technique, à savoir de cacher la vision d'autres éléments de construction tels que des dispositifs de fixation, des éléments de construction électrique, etc. Si le vitrage feuilleté fini est collé à un autre composant, une autre fonction de la couche protectrice en forme de cadre est de protéger la couche de colle d'un rayonnement aux UV qui lui serait néfaste.

Lorsqu'un vitrage feuilleté bombé contient au moins un panneau de verre bombé, le revêtement de surface transparent est en général disposé sur ce panneau de verre. Le revêtement de surface transparent peut alors être appliqué sur le panneau de verre bombé déjà terminé par exemple à l'aide de la pulvérisation réactive. Finalement, l'enlèvement par abrasion du revêtement de surface doit être réalisé sur le panneau bombé, et la couche protectrice doit aussi être appliquée sur le panneau bombé. Pour une fabrication industrielle, il est judicieux d'automatiser ces deux étapes de procédé. Pour cela, toutefois, en raison des passes de traitement nécessitant de l'espace, des machines complexes avec de nombreux axes de mouvement et les commandes associées sont nécessaires.

L'automatisation peut s'effectuer de manière considérablement plus simple si le revêtement de surface transparent est déposé sur le panneau de verre non bombé, encore plan et que le traitement suivant, c'est-à-dire l'enlèvement au niveau du bord ainsi que l'application de la couche protectrice s'effectue également sur le panneau plan. Un traitement éventuel à la main est également plus facile à réaliser sur un panneau plan, et présente peu de risques d'erreurs de manipulation. Si lesdites étapes de procédé sont réalisées sur un panneau de verre plane, le revêtement de surface transparent peut être appliqué directement sur l'ébauche au lieu d'être appliqué sur le panneau de verre déjà coupé à sa dimension externe. Lors de la fabrication industrielle de verre selon le processus de flottage, le revêtement de surface transparent est par exemple déposé de façon relativement peu laborieuse directement sur la feuille de verre continue produite ou sur des grandes plaques de verre ayant des dimensions de l'ordre de 3 m × 6 m dans ce qu'on appelle une machine à enduire discontinue (Batch Coater). Ceci permet d'omettre l'insertion fastidieuse d'une pluralité de panneaux de verre déjà coupés aux dimensions finies dans l'installation d'enduction. Une condition pour le dépôt du revêtement de surface transparent sur un panneau de verre plan est toutefois que l'on utilise des systèmes de couches qui ne soient pas endommagés par un traitement thermique éventuellement nécessaire tel que la cuisson de la couche protectrice ou le bombage d'un panneau de verre.

D'autres caractéristiques et avantages ressortent du dessin d'un vitrage feuilleté fabriqué selon le procédé de l'invention et de sa description détaillée qui suit.

Dans les dessins simplifiés, qui ne sont pas à l'échelle,
la figure 1 illustre une vue en coupe d'un vitrage feuilleté ayant un revêtement de surface transparent et un cadre décoratif opaque dans 1a zone du bord, et
la figure 2 est une représentation du profil d'un outil de meulage pour réaliser le procédé selon l'invention.

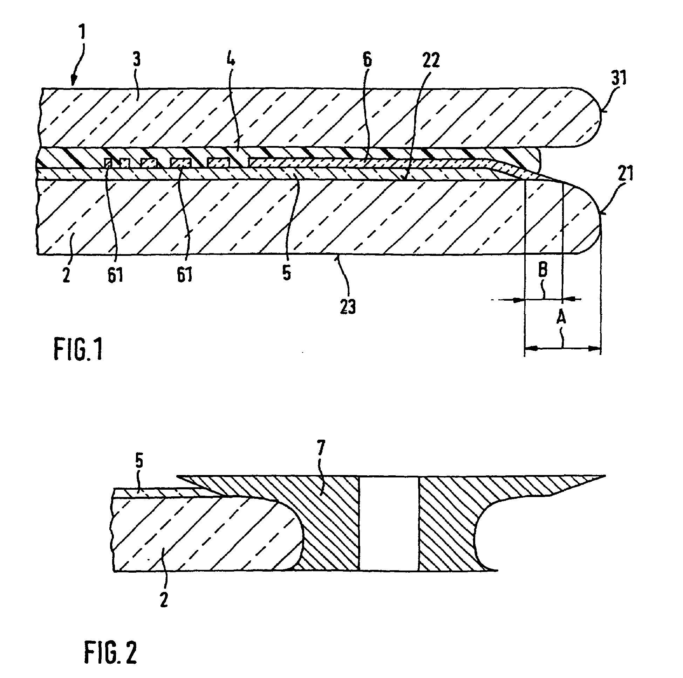

**La figure 1** reproduit la construction d'un vitrage feuilleté bombé 1 qui est illustré sous forme plane pour des raisons de simplicité. Un tel vitrage feuilleté peut par exemple être utilisé en tant que pare-brise dans la baie de carrosserie d'un véhicule. Il se compose d'un panneau de verre 2 faisant face vers l'espace intérieur, d'un panneau de verre 3 faisant face vers l'extérieur et d'une couche de colle 4 reliant les deux panneaux de verre l'un à l'autre. En tant que couche de colle 4, des films de matière synthétique thermoplastique, par exemple un polyvinylbutyral (PVB) disponible sous la dénomination Solutia 3G-Folie, se sont avérés avantageux.

Le panneau de verre 2 est recouvert sur toute sa surface d'un revêtement de surface 5 transparent, c'est-à-dire laissant essentiellement passer la lumière visible et réfléchissant le rayonnement infrarouge. Le revêtement de surface 5 est un système à couche mince avec deux couches fonctionnelles en argent et des couches diélectriques d'arrêt et antireflet qui sont disposées par-dessus, en dessous et entre les couches d'argent.

Avant que les deux panneaux de verre 2 et 3 soient reliés l'un à l'autre en intercalant la couche de colle 4 selon un procédé connu en soi par application de chaleur et/ou de pression au vitrage feuilleté 1, on effectue tout d'abord un traitement par meulage de ses arêtes périphériques 21, respectivement 31. L'arête périphérique 31 du panneau de verre 3 est pourvue d'un profil dit en C, comme cela est usuel dans la technique industrielle du traitement du verre. Par contre, l'arête périphérique 21 du panneau de verre 2 présente un profil asymétrique modifié en forme de C. Cela signifie que sur la surface principale revêtue 22, la zone meulée s'étend plus loin du bord que sur l'autre surface principale. Dans ce cas, l'ouverture du C est dimensionnée de telle sorte que le revêtement de surface 5 soit enlevé par abrasion dans la zone A pendant le processus de meulage. La figure 2 illustre un outil de meulage 7 approprié pour le processus de meulage décrit.

Après le traitement des arêtes périphériques des deux panneaux de verre 2 et 3, une couche protectrice opaque 6 est appliquée en forme de cadre le long des arêtes périphériques du panneau de verre 2. Le cadre décoratif formé par la couche protectrice 6 passe progressivement, dans la direction des arêtes périphériques vers le centre du panneau, à une trame de points 61. La couche protectrice 6 s'étend dans la direction de l'arête périphérique 21 dans une mesure telle qu'elle recouvre le revêtement de surface 5 dans une zone B d'environ 0,5 mm à 1 mm. La zone B peut s'étendre aussi au-delà de la projection de l'arête terminale de la branche de l'arête périphérique en forme de C tournée vers la surface principale 23. La couche protectrice 6 se compose d'une peinture céramique à cuire colorée avec des pigments noirs, par exemple de la peinture émaillée 249004 de la société DMC², et est imprimée par le procédé de sérigraphie. Après l'impression, la peinture céramique à cuire est séchée à environ 100°C puis est soumise à une cuisson à environ 620°C. Lorsqu'on souhaite fabriquer un vitrage feuilleté bombé, les deux panneaux de verre 2 et 3 sont mis en forme selon un procédé connu, par exemple sont bombés par le procédé de bombage utilisant un squelette.

Après l'opération de bombage, le film de colle thermoplastique 4 peut être introduit entre les panneaux de verre 2 et 3 et l'assemblage final peut être réalisé par l'application de chaleur et/ou de pression pour donner le vitrage feuilleté 1.

Il est également possible d'utiliser le revêtement de surface en tant que moyen de chauffage du panneau. Dans ce cas, au moins deux pistes collectrices du courant doivent être placées sur celui-ci. Un procédé de fabrication usuel pour ces pistes collectrices du courant est la sérigraphie d'une peinture à cuire conductrice de l'électricité directement sur le revêtement de surface. Lorsqu'on souhaite disposer les pistes collectrices du courant dans la zone périphérique du panneau, la couche protectrice est imprimée sur les pistes collectrices. Dans ce cas, il faut toutefois ménager un nombre déterminé de fenêtres dans la couche protectrice. La piste collectrice est accessible à travers ces fenêtres pour réaliser le contact avec une alimentation en tension électrique, par exemple par soudage d'un câble de connexion. Si lesdites fenêtres gênent l'aspect optique du vitrage feuilleté, on prévoit sur le deuxième panneau une couche décorative supplémentaire en forme de cadre, qui se trouve visible en transparence à travers le vitrage feuilleté dans la projection sur la couche protectrice.

L'application du revêtement de surface avec sa couche protectrice n'est pas limitée au panneau tourné vers l'intérieur du véhicule, en effet il est tout aussi envisageable de pourvoir le panneau tourné vers l'extérieur du revêtement de surface ou de connecter d'autres panneaux ou films auxdits panneaux, de sorte que le panneau revêtu se trouve à l'intérieur d'un assemblage de plus de deux panneaux.

Le matériau pour la couche de colle est choisi, en plus de la stabilité à long terme et de la transparence, en fonction également d'une bonne adhérence à toutes les surfaces en connexion avec elle, c'est-à-dire le matériau des panneaux, plus particulièrement le verre, le revêtement de surface transparent et la couche protectrice.

## Revendications

1. Procédé de fabrication d'un vitrage feuilleté (1) se composant d'au moins deux panneaux (2, 3) dont l'un est pourvu sur sa surface (22) se trouvant à l'intérieur du composite d'un revêtement de surface transparent (5) protégé contre la corrosion, et de couches de colle (4) reliant l'une à l'autre les panneaux (2, 3) respectifs, **caractérisé en ce qu'**il comprend les étapes suivantes :
- le long d'au moins une arête (21) du panneau revêtu (2), le revêtement de surface transparent (5) est enlevé dans une zone (A) se trouvant entre 0,1 mm et 5 mm de l'arête périphérique (21) du panneau dans la direction de la surface principale dudit panneau,
- une couche protectrice (6) imperméable à la diffusion de la vapeur d'eau et recouvrant l'arête limite extérieure du revêtement de surface transparent (5) est appliquée le long du bord dépourvu de couche du panneau revêtu (2),
- les panneaux (2, 3) sont assemblés l'un à l'autre en intercalant à chaque fois une couche de colle (4) de manière connue en soi pour former un vitrage feuilleté (1).

2. Procédé selon la revendication 1, **caractérisé en ce que** le revêtement de surface transparent (5) est enlevé par abrasion le long de l'arête du panneau revêtu (2).

3. Procédé selon la revendication 2, **caractérisé en ce que** l'enlèvement par abrasion du revêtement de surface (5) s'effectue simultanément à un traitement de meulage de l'arête périphérique (21).

4. Procédé selon l'une des revendications 1 à 3, **caractérisé en ce que** l'on utilise un revêtement organique en tant que couche protectrice recouvrant l'arête limite extérieure du revêtement de surface transparent (5).

5. Procédé selon l'une des revendications 1 à 4, **caractérisé en ce que** l'on utilise une peinture céramique à cuire en tant que couche protectrice (6) recouvrant l'arête limite extérieure du revêtement de surface transparent (5).

6. Procédé selon la revendication 4 ou 5, **caractérisé en ce que** la couche protectrice recouvre sur toute sa surface la surface principale du panneau revêtu (2) pourvu du revêtement de surface transparent (5).

7. Procédé selon la revendication 4 ou 5, **caractérisé en ce que** la couche protectrice (6) recouvrant l'arête limite extérieure du revêtement de surface transparent (5) est en forme de cadre.

8. Procédé selon la revendication 7, **caractérisé en ce que** la couche protectrice (6) recouvrant l'arête limite extérieure du revêtement de surface transparent (5) est opaque et sert simultanément de cadre décoratif.

9. Procédé selon la revendication 5, **caractérisé en ce qu'**au moins un des panneaux (2, 3) se compose de verre, que celui-ci est pourvu de la peinture céramique à cuire (6) et **en ce que** la peinture céramique à cuire (6) est cuite pendant une étape de procédé supplémentaire.

10. Procédé selon l'une des revendications 1 à 9, **caractérisé en ce qu'**au moins un des panneaux (2, 3) se compose de verre bombé qui est pourvu du revêtement de surface transparent (5) avant le processus de bombage.

11. Vitrage feuilleté (1), en particulier fabriqué selon un procédé suivant l'une ou plusieurs des revendications 1 à 10, se composant d'au moins deux panneaux (2, 3) reliés l'un à l'autre en intercalant à chaque fois une couche de colle (4) d'une manière connue en soi pour former un vitrage feuilleté (1), dont l'un (2) est pourvu sur sa surface (22) se trouvant à l'intérieur du composite d'un revêtement de surface transparent (5), le revêtement de surface transparent (5) étant enlevé le long d'au moins une arête du panneau revêtu (2) dans une zone (A) entre 0,1 mm et 5 mm de l'arête périphérique (21) du panneau dans la direction de la surface principale du panneau et la zone de transition entre les parties revêtue et non revêtue de la surface principale du panneau étant recouverte d'une couche protectrice (6) imperméable à la diffusion de la vapeur d'eau.

12. Vitrage feuilleté (1) selon la revendication 11, **caractérisé en ce que** la surface de la zone non revêtue de la surface principale du panneau se raccorde à la surface de la zone revêtue en formant un angle compris entre 180° et 190°.

13. Vitrage feuilleté (1) selon la revendication 11 ou 12, **caractérisé en ce que** la couche protectrice (6) est une peinture céramique à cuire.

## Claims

1. Process for manufacturing a laminated glazing unit (1) composed of at least two panes (2, 3), one of which is provided on its surface (22) facing the inside of the composite with a corrosion-protected transparent surface coating (5) and with layers of adhesive (4) joining the respective panes (2, 3) together, **characterized in that** it comprises the following steps:
- the transparent surface coating (5) is removed along at least one edge (21) of the coated pane (2) in a region (A) lying between 0.1 mm and 5 mm from the peripheral edge (21) of the pane in the direction of the main surface of the said pane;
- a protective layer (6), impermeable to the diffusion of water vapour and covering the external boundary edge of the transparent surface coating (5), is applied along that edge of the coated pane (2) from which the coating has been stripped;
- the panes (2, 3) are joined together by inserting each time a layer of adhesive (4) in a manner known per se in order to form a laminated glazing unit (1).

2. Process according to Claim 1, **characterized in that** the transparent surface coating (5) is s removed along the edge of the coated pane (2) by abrasion.

3. Process according to Claim 2, **characterized in that** the removal of the surface coating (5) by abrasion is carried out simultaneously with a grinding treatment for grinding the peripheral edge (21).

4. Process according to one of Claims 1 to 3, **characterized in that** an organic coating is used as the protective layer covering the external boundary edge of the transparent surface coating (5).

5. Process according to one of Claims 1 to 4, **characterized in that** a ceramic paint to be baked is used as the protective layer (6) covering the external boundary edge of the transparent surface coating (5).

6. Process according to Claim 4 or 5, **characterized in that** the protective layer covers, over its entire surface, the main surface of the coated pane (2) provided with the transparent surface coating (5).

7. Process according to Claim 4 or 5, **characterized in that** the protective layer (6) covering the external boundary edge of the transparent surface coating (5) is in the form of a frame.

8. Process according to Claim 7, **characterized in that** the protective layer (6) covering the external boundary edge of the transparent surface coating (5) is opaque and serves at the same time as a decorative

9. Process according to Claim 5, **characterized in that** at least one of the panes (2, 3) is made of glassy, **in that** it is provided with a ceramic paint to be baked (6) and **in that** the ceramic paint to be baked (6) is baked during an additional process step.

10. Process according to one of Claims 1 to 9, **characterized in that** at least one of the panes (2, 3) is made of curved glass which is provided with the transparent surface coating (5) before the bending procedure.

11. Laminated glazing unit (1), in particular manufactured using a process according to one or more of Claims 1 to 10, composed of at least two panes (2, 3) connected together by inserting each time a layer of adhesive (4) in a manner known per se in order to form a laminated glazing unit (1), one pane (2) of which is provided on its surface (22) facing the inside of the composite with a transparent surface coating (5), the transparent surface coating (5) being removed along at least one edge of the coated pane (2) in a region (A) between 0.1 mm and 5 mm from the peripheral edge (21) of the pane in the direction of the main surface of the pane and the transition region between the coated and uncoated parts of the main surface of the pane being covered with a protective layer (6) impermeable to the diffusion of water vapour.

12. Laminated glazing unit (1), according to Claim 11, **characterized in that** the surface of the uncoated region of the main surface of the pane is joined to the surface of the coated region, making an angle of between 180° and 190°.

13. Laminated glazing unit (1) according to Claim 11 or 12, **characterized in that** the protective layer (6) is a ceramic paint to be baked.

## Patentansprüche

1. Verfahren zur Herstellung einer Verbundglasscheibe (1), die sich aus mindestens zwei Scheiben (2, 3), wovon eine auf der Fläche (22), die sich im Inneren des Verbundes befindet, mit einer vor Korrosion geschützten transparenten Beschichtung (5) versehen ist, und Klebstoffschichten (4), die die Scheiben (2, 3) miteinander verbinden, zusammensetzt, **dadurch gekennzeichnet, dass** es die Stufen:
- Entfernen der transparenten Beschichtung (5) entlang mindestens einer Kante (21) der beschichteten Scheibe (2) in einem Bereich (A), der sich zwischen 0,1 mm und 5 mm ab der Umfangskante (21) der Scheibe in Richtung der Hauptfläche dieser Scheibe befindet,
- Aufbringen einer gegenüber der Diffusion von Wasserdampf undurchlässigen Schutzschicht (6), welche die äußere Kante der transparenten Beschichtung (5) bedeckt, entlang des Randes, der von der Schicht der beschichteten Scheibe (2) befreit worden ist, und
- Assemblieren der Scheiben (2, 3), indem jedes Mal eine Klebstoffschicht (4) auf an sich bekannte Weise eingefügt wird, um eine Verbundglasscheibe (1) zu bilden,
umfasst.

2. Verfahren nach Anspruch 1, **dadurch gekennzeichnet, dass** die transparente Beschichtung (5) entlang der Kante der beschichteten Scheibe (2) durch Abtragen entfernt wird.

3. Verfahren nach Anspruch 2, **dadurch gekennzeichnet, dass** das Entfernen der Beschichtung (5) durch Abtragen gleichzeitig mit einem Beschleifen der Umfangskante (21) durchgeführt wird.

4. Verfahren nach einem der Ansprüche 1 bis 3, **dadurch gekennzeichnet, dass** eine organische Beschichtung als Schutzschicht verwendet wird, welche die äußere Kante der transparenten Beschichtung (5) bedeckt.

5. Verfahren nach einem der Ansprüche 1 bis 4, **dadurch gekennzeichnet, dass** ein einzubrennender keramischer Anstrich als Schutzschicht (6) verwendet wird, welche die äußere Kante der transparenten Beschichtung (5) bedeckt.

6. Verfahren nach Anspruch 4 oder 5, **dadurch gekennzeichnet, dass** die Schutzschicht die Hauptfläche der beschichteten Scheibe (2), die mit der transparenten Beschichtung (5) versehen ist, auf ihrer gesamten Fläche bedeckt.

7. Verfahren nach Anspruch 4 oder 5, **dadurch gekennzeichnet, dass** die Schutzschicht (6), welche die äußere Kante der transparenten Beschichtung (5) bedeckt, die Form eines Rahmens hat.

8. Verfahren nach Anspruch 7, **dadurch gekennzeichnet, dass** die Schutzschicht (6), welche die äußere Kante der transparenten Beschichtung (5) bedeckt, opak ist und gleichzeitig als dekorativer Rahmen dient.

9. Verfahren nach Anspruch 5, **dadurch gekennzeichnet, dass** mindestens eine der Scheiben (2, 3) aus Glas besteht, welche diejenige ist, die mit dem einzubrennenden keramischen Anstrich (6) versehen ist, und dass der einzubrennende keramische Anstrich (6) in einer zusätzlichen Verfahrensstufe eingebrannt wird.

10. Verfahren nach einem der Ansprüche 1 bis 9, **dadurch gekennzeichnet, dass** mindestens eine der Scheiben (2, 3) aus gebogenem Glas besteht, das mit der transparenten Beschichtung (5) vor dem Biegevorgang versehen wird.

11. Verbundglasscheibe (1), die insbesondere gemäß einem Verfahren nach einem oder mehreren der Ansprüche 1 bis 10 hergestellt worden ist und sich aus mindestens zwei Scheiben (2, 3) zusammensetzt, die durch jedesmaliges Einfügen einer Klebstoffschicht (4) auf eine an sich bekannte Weise miteinander verbunden sind, um eine Verbundglasscheibe (1) zu bilden, wovon eine Scheibe (2) auf der Fläche (22), die sich im Inneren des Verbundes befindet, mit einer transparenten Beschichtung (5) versehen ist, die entlang mindestens einer Kante der beschichteten Scheibe (2) in einem Bereich (A) zwischen 0,1 mm und 5 mm ab der Umfangskante (21) der Scheibe in Richtung der Hauptfläche der Scheibe entfernt worden ist, und der Übergangsbereich zwischen den beschichteten und den unbeschichteten Teilen der Hauptfläche der Scheibe mit einer Schutzschicht (6) bedeckt ist, die gegenüber der Diffusion von Wasserdampf undurchlässig ist.

12. Verbundglasscheibe (1) nach Anspruch 11, **dadurch gekennzeichnet, dass** die Fläche des unbeschichteten Bereichs der Hauptfläche der Scheibe sich an die Fläche des beschichteten Bereichs anschließt, wobei sich ein Winkel von 180° bis 190° bildet.

13. Verbundglasscheibe (1) nach Anspruch 11 oder 12, **dadurch gekennzeichnet, dass** die Schutzschicht (6) ein einzubrennender keramischer Anstrich ist.
